# EUROPÄISCHE PATENTSCHRIFT

(11) **EP 0 787 687 B1**
(45) Veröffentlichungstag und Bekanntmachung des Hinweises auf die Patenterteilung: **05.12.2001**
(21) Anmeldenummer: 97105480.4
(22) Anmeldetag: 01.09.1992
(51) Int. Cl.: C02F 1/20, B01D 19/00, B09B 3/00, C02F 3/22

(54) **Vorrichtung zum Reinigen von Grundwasser durch Strippen mit einem Gas, insbesondere Luft**
Device for the purification of ground water, by stripping with a gas, particularly air
Dispositif pour la purification des eaux souterraines par extraction avec un gaz, en particulier de l'air

(30) Priorität: 05.09.1991 DE 4129511
(43) Veröffentlichungstag der Anmeldung: 06.08.1997
(62) Teilanmeldung aus: 92114896.1
(73) Patentinhaber: Ed. Züblin Aktiengesellschaft, D-70567 Stuttgart (DE)
(72) Erfinder: Högg, Peter, 71332 Waiblingen (DE); Hager, Eberhard, 74532 Ilshofen (DE)
(74) Vertreter: Wasmuth, Rolf, Dipl.-Ing.

(56) Entgegenhaltungen:
- EP-A- 0 418 572
- DE-U- 9 005 565

## Beschreibung

Die Erfindung betrifft eine Vorrichtung zum Reinigen von Grundwasser durch Strippen mit einem Gas, insbesondere Luft, nach dem Oberbegriff des Anspruchs 1.

Zur Reinigung von Grundwasser ist es bekannt, über Tage das Wasser durch Strippen mit Gas, insbesondere Luft, zu reinigen. Mit der durch das Wasser geführten Luft werden leichtflüchtige Verunreinigungen ausgetragen.

Eine aus der DE-U 90 05 565 bekannte Vorrichtung weist ein Brunnenrohr auf, das aus einem Förderrohr und einem das Förderrohr umgebenden Mantelrohr größeren Durchmessers zusammengesetzt ist. Im unteren Endabschnitt des Förderrohres liegt ein Wasserzulauf, durch den das zu reinigende Grundwasser der Vorrichtung zugeführt ist. Nach der Reinigung verläßt das Grundwasser die Vorrichtung über den im unteren Endabschnitt des Mantelrohres ausgebildeten Wasserablauf. In das Förderrohr mündet ein Injektorrohr zum Zuführen von Strippgas, welches nach Durchströmen des Wassers in einem zwischen dem Förderrohr und dem Mantelrohr liegenden ringförmigen Trennraum austritt. Der als Ringraum ausgebildete Trennraum ist vom Außenmantel des Förderrohres sowie vom Innenmantel des Mantelrohres begrenzt und von einem Deckel verschlossen, der einen Abluftstutzen für das Strippgas trägt.

Der als Trennraum genutzte Ringraum ist sehr eng und hat ein geringes Volumen. Zur Erzielung einer hohen Reinigungsleistung muß aber ein hoher Luftdurchsatz sichergestellt werden, wobei sich im Ringraum hohe Strömungsgeschwindigkeiten ergeben, die ein Mitreißen des Wassers in den Ablaufstutzen bewirken können. Um dies zu verhindern, kann der Luftdurchsatz nicht erhöht werden, so daß die Leistung der Vorrichtung zum Reinigen von Grundwasser beschränkt ist.

Aus der EP-A 0 418 572 ist eine Vorrichtung bekannt, bei der ein einziges zylindrisches Rohr das Brunnenrohr bildet. Der Wasserzulauf ist im unteren Endabschnitt des zylindrischen Rohres vorgesehen; der Wasserablauf liegt unterhalb des Trennraumes und unterhalb des Grundwasserspiegels in einem oberen Bereich des Rohres. Um einen ausreichenden Wasserstrom vom Wasserzulauf zum Wasserablauf zu erhalten, ist eine Pumpe angeordnet, die das Wasser einer Verwirbelungszone zuführt, in welche das Strippgas eingeleitet ist. Der Aufbau der Vorrichtung ist aufwendig, benötigt einen großen Bauraum und hat einen hohen Energiebedarf.

Der Erfindung liegt die Aufgabe zugrunde, eine Vorrichtung zum Reinigen von Grundwasser durch Strippen mit einem Gas derart weiterzubilden, daß bei hoher Reinigungswirkung und konstruktiv einfachem Aufbau ein nur geringer Energiebedarf zum Betrieb des Brunnens notwendig ist.

Diese Aufgabe wird erfindungsgemäß nach Anspruch 1 gelöst.

Durch den angegebenen Aufbau der Vorrichtung ist ein ringzylindrischer Trennraum mit großem Trennraumvolumen gegeben, wobei die äußere Baugröße klein gehalten ist. Aus dem ringzylindrischen Trennraum kann das aus dem Wasser ausgetretene Strippgas bei kleinen Wegstrecken unmittelbar abgeführt werden, so daß hohe Strömungsgeschwindigkeiten vermieden sind. Bei kleinen Außenmaßen und unter Vermeidung hoher Strömungsgeschwindigkeiten ist ein großer Luftdurchsatz und damit eine große Leistung der Vorrichtung möglich. Der über dem Ende des Injektorrohres liegende Wasserablauf bewirkt ein Auswaschen des Bodens mit gereinigtem Wasser, so daß auch eine Bodenreinigung oberhalb des Grundwasserspiegels erzielt ist. Dabei ist der Wasserablauf in einen vom Grundwasser freien Bodenbereich vorteilhaft, da geringe Strömungswiderstände vorliegen. Ein gesteigerter Wasserdurchsatz und damit eine hohe Leistung des Brunnens ist bei konstruktiv einfachem Aufbau gegeben.

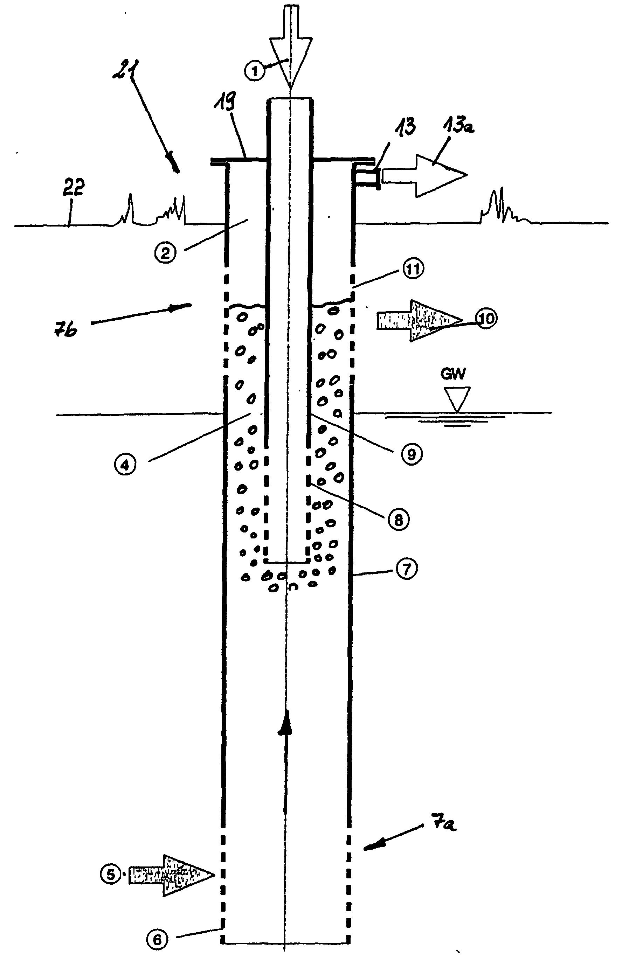

Weitere Merkmale der Erfindung ergeben sich aus dem weiteren Anspruch, der Beschreibung und der Zeichnung, in der ein nachstehend im einzelnen beschriebenes Ausführungsbeispiel der Erfindung dargestellt ist.

Der gezeigte Brunnen besteht im wesentlichen aus zwei koaxial zueinander liegenden, zylindrischen Rohren 7 und 9. Das Brunnenrohr 21 ist etwa lotrecht im Boden 22 abgeteuft und besteht aus einem zylindrischen Förderrohr 7 und einem Injektorrohr 9. Das Förderrohr 7 weist neben dem Wasserzulauf 6 in seinem unteren, vorzugsweise offenen Endabschnitt 7a im Bereich seines oberen Endabschnitts 7b den Wasserablauf 11 auf. Der Wasserzulauf 6 wie der Wasserablauf 11 weisen eine Verfilterung auf, über die das Wasser gefiltert zu- bzw. abströmt. Der Wasserablauf 11 liegt oberhalb des Grundwasserspiegels GW.

Oberhalb des Wasserablaufs 11 ist ein Trennraum 2 vorgesehen, der durch einen das Förderrohr 7 luftdicht verschließenden Deckel 19 begrenzt ist. Im Deckel 19 ist das im Durchmesser kleiner ausgebildete Injektorrohr 9 zentral gehalten, welches koaxial in das Förderrohr 7 ragt und dessen unterer, offener Endabschnitt 8 Luftaustrittsöffnungen aufweist. Der Endabschnitt 8 des Injektorrohres 9 ist ähnlich einer Siebwandung ausgebildet und kann an seinem offenen Ende verschlossen sein. Anstelle einer gelochten Siebwand kann der Endabschnitt auch in eine Einzeldüse münden. Der Endabschnitt 8 liegt unterhalb des Grundwasserspiegels GW.

Der größte Durchmesser des Strippbereiches 4 entspricht dem größten Durchmesser des Trennraums 2.

Über das Injektorrohr 9 wird in Pfeilrichtung 1 ein Strippgas, vorzugsweise Druckluft, zugeführt, welches durch den gelochten Endabschnitt 8 in das im Förderrohr 7 stehende Grundwasser austritt. Die Druckluft entspannt sich und steigt in dem durch das Injektorrohr 9 und das Förderrohr 7 begrenzten Ringraum nach oben, der den Strippbereich 4 bildet. Dadurch bedingt steigt der Flüssigkeitsspiegel im Förderrohr 7 bis zum Wasserablauf 11, wobei die Strippluft zusammen mit den Verunreinigungen in den annähernd Umgebungsdruck aufweisenden ringzylindrischen Trennraum 2 aufsteigt und das Wasser über die Verfilterung und den Wasserablauf 11 abströmt. Der in das Grundwasser eingebrachte Luftdruck entspannt sich in einem im günstigen Verhältnis von Strippbereich zum Trennraum stehenden Volumen. Auf diese Weise wird Grundwasser in Pfeilrichtung 5 durch den Wasserzulauf 6 in das Förderrohr 7 einströmen, zum Strippbereich 4 aufsteigen, in den Trennraum 2 übertreten und in Pfeilrichtung 10 über den Wasserablauf 11 abströmen.

Die über das Injektorrohr 9 in Pfeilrichtung 1 unter Druck zugeführte Strippluft trägt leicht flüchtige Verunreinigungen wie chlorierte Kohlenwasserstoffe und ähnliches aus dem Grundwasser aus und steigt in den Trennraum 2 auf, in dem etwa Umgebungsluftdruck herrscht. Von dort wird über den im Förderrohr liegenden Luftaustritt 13 die Strippluft zusammen mit den Verunreinigungen in Pfeilrichtung 13a abgesaugt.

Die unter Überdruck eingebrachte Strippluft stellt einen ausreichenden Luftdurchsatz sicher und gewährleistet gleichzeitig eine ausreichende Strömung vom Wasserzulauf 6 zum Wasserablauf 4.

## Patentansprüche

1. Vorrichtung zum Reinigen von Grundwasser durch Strippen mit einem Gas, insbesondere Luft, mit einem in die Grundwasser führenden Schichten des Bodens (22) abgeteuften Brunnenrohr (21), welches einen unteren Wasserzulauf (6) und einen oberen Wasserablauf (11) aufweist, mit einer Anordnung zur Aufrechterhaltung eines im Förderrohr (7) aufsteigenden Grundwasserstromes vom Wasserzulauf (6) zum Wasserablauf (11), die aus einem in das Brunnenrohr (21) mündenden Druckrohr als Injektorrohr (9) besteht, das unterhalb des Grundwasserspiegels (GW) ausmündet und durch dessen Endabschnitt (8) unter Überdruck stehendes Strippgas in das im Förderrohr (7) stehende Grundwasser zugeführt ist und mit einem im oberen Ende des Brunnenrohres (21) ausgebildeten Trennraum (2), der oberhalb des Wasserablaufs (11) und des Grundwasserspiegels (GW) liegt und von einem das obere Ende des Brunnenrohres (21) verschließenden Deckel (19) begrenzt ist, wobei das Strippgas in den Trennraum (12) aufsteigt und über einen Luftaustritt (13) abgeführt ist, wobei das Brunnenrohr (21) aus einem einzigen zylindrischen Rohr als Förderrohr (7) gebildet ist, welches den aufsteigenden Grundwasserstrom führt sowie den Wasserzulauf (6) und den Wasserablauf (11) aufweist, und der Wasserablauf (11) über dem Ende (8) des Injektorrohres (9) liegt und damit oberhalb des Grundwasserspiegels (GW).

2. Vorrichtung nach Anspruch 1,
**dadurch gekennzeichnet, daß** das Injektorrohr (9) koaxial im Förderrohr (7) liegt.

## Claims

1. A device for the purification of ground water by stripping with a gas, particularly air, with a well casing (21) sunk into the ground layers (22) carrying ground water, which has a bottom water inlet (6) and an upper water outlet (11), with a layout maintaining the flow of water rising in the delivery tube (7) from the water inlet (6) to the water outlet (11), the layout comprising the pressure tube in the form of an injector tube (9) terminating in the well casing (21), with its end below the ground water level (GW), the pressurised stripping gas being fed to the ground water present in the delivery tube (7) through its end section (8), and with a separating space (2) formed at the upper end of the well casing (21) positioned above the water outlet (11) and the ground water level (GW) and delimited by the cover (19) closing the top end of the well casing (21), the stripping gas rising to the separating space (2) and being carried away through an air outlet (13), the well casing (21) being formed by a single cylindrical tube as the a delivery tube (7) which carries the rising ground water and has the water inlet (6) and the water outlet (11), the water outlet (11) being located above the end (8) of the injector tube (9) and thus above the ground water level (GW).

2. A device according to claim 1,
**characterised in that** the injector tube (9) is located coaxially within the delivery tube (7).

## Revendications

1. Dispositif servant à la purification d'eaux souterraines par extraction avec un gaz, notamment de l'air, avec un tuyau de puits (21) enfoncé dans les couches du sol (22) acheminant des eaux souterraines, lequel tuyau de puits présente une arrivée d'eau inférieure (6) et une sortie d'eau supérieure (11), avec un agencement pour le maintien d'un flux d'eaux souterraines montant dans le tuyau de transport (7), depuis l'arrivée d'eau (6) jusqu'à la sortie d'eau (11), lequel dispositif se compose d'un tuyau de pression servant de tuyau d'injecteur (9) débouchant dans le tuyau de puits (21), lequel tuyau d'injecteur sort au-dessous du niveau des eaux souterraines (GW), et le gaz d'extraction se trouvant en surpression est acheminé, à travers l'embout (8) du tuyau d'injecteur, dans les eaux souterraines se trouvant dans le tuyau de transport (7), et avec un espace de séparation (2) formé dans l'extrémité supérieure du tuyau de puits (21), lequel espace de séparation se trouve au-dessus de la sortie d'eau (11) et au-dessus du niveau des eaux souterraines (GW), lequel espace de séparation est limité par un couvercle (19) obturant l'extrémité supérieure du tuyau de puits (21), où le gaz d'extraction montant dans l'espace de séparation (2) est évacué par une sortie d'air (13), où le tuyau de puits (21) est formé par un seul tuyau cylindrique servant de tuyau de transport (7) qui achemine le flux montant d'eaux souterraines et qui comprend également l'arrivée d'eau (6) et la sortie d'eau (11), et où la sortie d'eau (11) se trouve au-dessus de l'extrémité (8) du tuyau d'injecteur (9) et donc au-dessus du niveau des eaux souterraines (GW).

2. Dispositif selon la revendication 1, **caractérisé en ce que** le tuyau d'injecteur (9) est placé de façon coaxiale dans le tuyau de transport (7).
